# EUROPEAN PATENT SPECIFICATION

(11) **EP 1 684 619 B1**
(45) Date of publication and mention of the grant of the patent: **14.01.2009**
(21) Application number: 04769016.9
(22) Date of filing: 26.10.2004
(51) Int. Cl.: A47J 19/02

(54) **KITCHEN MACHINE**
KÜCHENMASCHINE
ROBOT CULINAIRE

(30) Priority: 13.11.2003 GB 0326440
(43) Date of publication of application: 02.08.2006
(73) Proprietor: Kenwood Limited, Havant, Hampshire PO9 2NH (GB)
(72) Inventor: COTTON, John, Havant, Hampshire P09 1SS (GB)
(74) Representative: Marsh, Robin Geoffrey
(86) International application number: PCT/GB2004/004509
(87) International publication number: WO 2005/051146

(56) References cited:
- FR-A- 2 747 905
- US-A- 2 870 653
- US-A- 5 669 289

## Description

This invention relates to kitchen machines, and it relates especially, though not exclusively to juicer arrangements, such as centrifugal juicers intended for the domestic market. Such juicers typically comprise motor-driven appliances capable of extracting the juice from natural produce such as fruits (typically citrus fruits) and/or vegetables, and delivering the juice into a vessel, such as a jug or carafe, that is positioned adjacent the main body of the appliance to receive the juice by way of an outlet duct.

Typically, such juicers incorporate a macerating device, such as a discoidal cutter plate, to pulp the produce; the cutter plate overlying, or forming part at least of, the base of an open-topped, drum-like container, the upright wall of which is foraminated, i.e. pierced or otherwise formed with small holes and/or narrow slits, thus being sufficiently porous to permit juice to pass therethrough. The drum-like container is spun sufficiently rapidly to separate the juice from the pulped produce, leaving behind pulp residues, comprising mainly fibrous bulk matter. It is also conventional for the appliances to incorporate, within the drum-like container, one or more removable filters, configured and located to assist in the interception and retention of the residues.

Appliances based upon the foregoing general arrangement are well established, can be economically manufactured and work quite well.

Difficulties arise however in certain respects; in particular the convenience and ease with which residues can be removed after the completion of one or more juicing cycles, depending upon the capacity of the appliance. Typically, it is difficult and time-consuming to clean surfaces of the juicer upon which residues are deposited, particularly where the surfaces depart in any way from smooth, linear forms. It is to be borne in mind, in this respect, that the residues are thrown, when moist, against the juicer surfaces, and thus tend to adhere quite strongly.

Where removable filters are provided in disposable form, the filters tend to take the form of strips or loops of material such as paper, fabrics or meshes of plastics material, which are designed to lie adjacent the inner surface of the wall of the aforementioned drum-like container, though it has recently been proposed, in GB-2376648-A, that such filters may additionally comprise at least a partial base, thus making a generally cup-shaped filter that advantageously can be used rather like a bag and thus is intended to facilitate withdrawal of the bulk of the residues from the appliance. In any event, such filters tend to become sodden when laden with juice and residues, and it is difficult for users to remove them for disposal without creating mess and spillage.

Moreover, even where such removable filters are designed for re-use, and are thus self-supporting at least to a degree, their moist contents will often drip en route to a disposal area. More importantly, however, the filter construction usually creates regions, in the vicinity for example of support webs, or of rims designed to prevent residues from migrating towards the lid of the appliance, from which it is difficult to remove the residues, even with the filter withdrawn from the drum of the appliance.

Irrespective of the use of an additional (removable) filter, some residues inevitably reach and adhere to other surfaces of the juicer, such as the foraminated wall of the drum, from which they are equally difficult to remove, and thus difficulties remain in relation to the overall removal and cleansing procedures associated with the filters and residues and, in particular, to the ease and convenience with which such procedures can be implemented by users of such appliances. It will be appreciated that such difficulties also confront the users of other kitchen machines, such as food processors and other electrically driven slicing and/or shredding appliances.

It is an object of this invention to provide a kitchen machine, such as a centrifugal juicer, in which at least one of the above-recited difficulties is reduced and which moreover provides a convenient and user-friendly means whereby removable filters and their contents can be removed from the working compartment of such an arrangement.

US-A-2870653 describes a centrifugal juice extractor in which a cutter cylinder bearing cutter lips and associated holes is disposed immediately within, and rotates together with, a cylindrical rotor formed with slits to separate juice from pulp. The drive and cutter cylinders are removably secured to the appliance by means of a bayonet-type fitting and can be withdrawn from the appliance as a unit for cleaning.

According to the invention there is provided a kitchen machine comprising a substantially tubular container for produce to be macerated, said container comprising a base and a foraminated wall extending away from said base; the machine further comprising a macerating device in operative communication with the container, a motor capable of rotating the container and/or the macerating device about an axis to slice, shred or otherwise fragment the produce, and filter means to substantially retain within said container unwanted residues of said produce; said foraminated wall forming a part of said filter means; the machine being characterised in that said filter means further comprises additional filter means disposed adjacent said foraminated wall, and in that the machine further comprises a removal means protruding from the said macerating device and extending along said axis; said removal means being adapted to be grasped by a user to permit removal of said macerating device and said additional filter means, together with residue materials retained thereby, from the container; and wherein, after said removal, the macerating device is further separable from said additional filter means.

In a preferred embodiment of the invention, the machine comprises a juicer; said tubular container being located within a fixed casing having an outlet for juice; said filter means being sufficiently porous to permit juice to flow therethrough to said outlet whilst substantially retaining said residue materials within said container.

By providing additional filter means disposed adjacent the foraminated wall of said container, a dual filtering operation is implemented and furthermore, the container may be left in place within the juicer when the macerating device and the additional filter means are removed for disposal of residue material retained thereby.

The additional filter means may comprise disposable and/or re-usable filter elements.

Where a disposable filter element is used, it is preferred that the container be removable from the juicer, together with the macerating device and the additional filter, for disposal of the residue materials.

Where a re-usable filter element is used, the container may be left in place in the juicer whilst the residue materials are disposed of. Alternatively, the foraminated wall of the container may constitute the filter element. In either event, the filter may be constructed so as to engage releasably with said macerating device.

In a further preferred embodiment, the removal means comprises a pillar disposed substantially centrally of said macerating device and extending upwardly therefrom. Further preferably, the pillar is shaped for ease of grasping by the fingers of a user to facilitate withdrawal from the juicer.

In a particularly preferred embodiment, the pillar is further shaped to engage for relative rotation a seating formed in a lid used to cover said container.

In order that the invention may be clearly understood and readily carried into effect, one embodiment thereof will now be described, by way of example only, with reference to the accompanying drawings, of which:

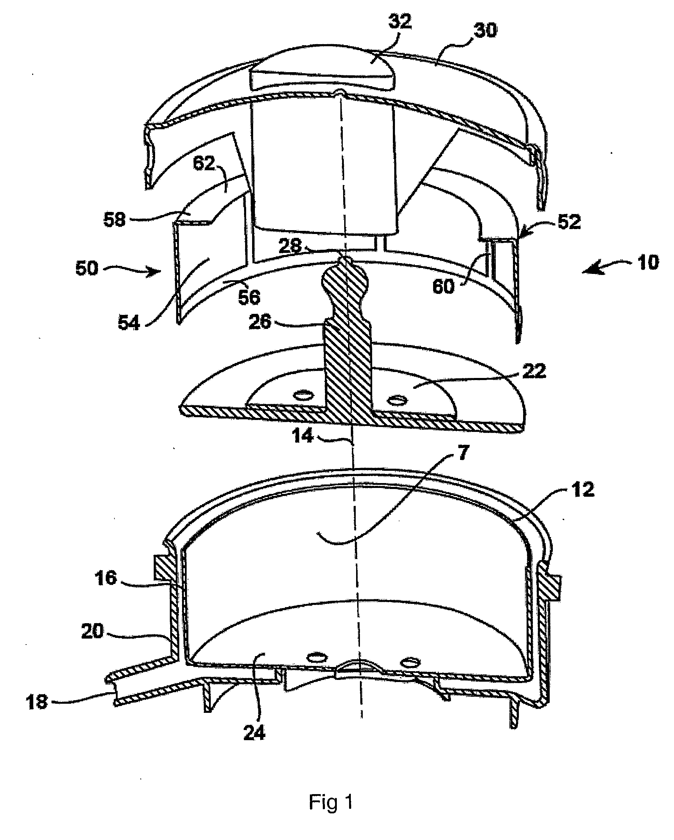

Figure 1 shows, in exploded perspective view, the essential components of a kitchen machine comprising, in accordance with an embodiment of the invention, a juicer arrangement, including the relevant parts of the main appliance, and also a vessel located to receive the juice; and

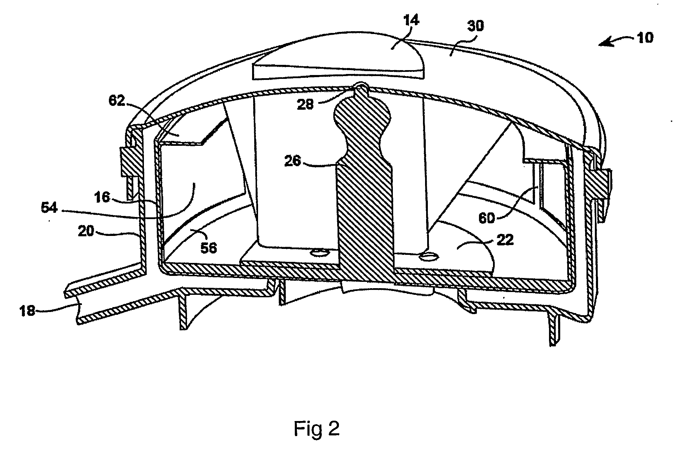

Figure 2 shows in assembled form the components of the machine shown in Figure 1.

Referring now to the drawings, the exemplary embodiment shown comprises a juicer appliance, part of which shown generally at 10 and includes an open-topped, drum-like container 12, rotatable about its cylindrical axis 14 and formed with a foraminated side wall 16, through which juice is intended to pass on its way to an outlet port 18 formed in the base of a static bowl 20. The side wall 16 of the drum-like container 12 thus forms, in this specific example, part of a filter means for separating the juice from unwanted residues of the juicing process.

In this example, an additional filter means in the form of a re-usable filter 50, of any convenient kind, is provided to intercept the major part of the fibrous residues of the pulp and other unwanted by-products of the juicing process, and is supported close to an inner surface of the foraminated wall 16 of the container 12. The removable filter 50 may alternatively be disposable, in which case it may be formed for example as a strip of material, such as paper, fabric or a plastics mesh, or looped to match the inner diameter of the wall 12, or formed, as described in the aforementioned GB-2376648-A, as a generally cup-like, or bag-like, member.

A discoidal macerating plate 22 is incorporated into, or mounted just above, the base 24 of the drum-like container 12; the plate 22 being suspended from a carrier 26 which extends linearly along the rotational axis 14 of the container 12. The carrier 26 may be integrally formed with the plate 22. Alternatively, the carrier 26 may be formed separately from the plate 22, in which case the carrier may be either removable from or affixed to the plate. Where the carrier 26 and the plate 22 are formed separately, they may be made of the same material (though not necessarily the same grade), or they may be of different materials.

The upper extremity 28 of the carrier 26 is journalled for rotation in a suitable support provided in a lid 30, which should always be firmly secured in place when the juicer is in use, so as to cover all of the rotating components. It will be appreciated that, in some embodiments, the drum 12 and the macerating plate 22 rotate together in the same direction and at the same rate. In alternative embodiments, the two components may rotate in the same direction at different rates or in opposite directions. In some sophisticated appliances, different combinations of the foregoing rotational arrangements may be available, either being called into use automatically, depending upon function selections made by the user, or manually, as directly selectable user options.

The lid 30 is formed with a feed-tube 32, through which produce from which juice is to be extracted can be introduced into the working chamber defined within the drum-like container 12. A pusher device (not shown) is also provided; the pusher being in the nature of a rod, shaped and dimensioned to pass through the feed-tube and intended for use, in known manner, to urge the produce against the macerating plate 22. Typically, the pusher is a slidable fit in the feed-tube 32; the external configuration of the pusher matching the shape of the inner surface of the feed-tube. It will be appreciated that the feed-tube 32 provides an aperture, through the lid 30, which is closed by the insertion of the pusher.

In accordance with this example of the invention, the removable filter 50 being re-usable, comprises a tubular element, open at both ends, and is formed of a frame portion 52 and a mesh, or filter portion 54. The frame portion 52 comprises a lower circular wall member 56, an upper circular wall/rim member 58 and a plurality of longitudinal ribs such as 60.

Components 52 and 54 may either be made of metallic or of plastics material; depending upon the operational requirements placed upon them. Indeed, the component 52 may be made of metallic material and the component 54 of plastics material, or vice-versa. Furthermore, the sub-components 56, 58 and 60 of the component 52 may variously be made in any combination of metallic or plastics materials.

Preferably, as in this example, the lower wall member 56 is dimensioned and configured so as to fit snugly within a groove (not shown) formed in the upper discoidal surface of the macerating device 22. Co-operative snap-fitting or other engagement components are provided in the lower wall member 56 and in the aforementioned groove, to hold the additional filter member 50 in releasable engagement with the macerating device 22.

The wall/rim member 58 may if desired be of minimal radial thickness. It is preferred however that this member comprises an annular flange 62 having a considerable radial extent, in order to create a barrier intended to resist the migration or impulsion of unwanted residues upwardly from the region occupied by the removable filter and into contact with the underside of the lid 30. If such contact occurs, it can prove difficult and time consuming for a user to clean the lid, since the interior surfaces of such lids are often fairly complex in shape and configuration. Moreover if, as is often the case, the lid is wholly transparent or translucent or is provided with a window, so that the user can observe the progress of the juicing operation, the residues can at least partially obscure the user's view. In practice, the rim may have any chosen radial dimension, subject to the maximum radially inward extent of the flange 62 being limited so as to avoid contact with the feed-tube 32.

Since the axially-extending wall 16 of the container 12 is foraminated, the juice, having traversed the filter portion 54 of the additional filter 50, can pass therethrough, for collection at the outlet port 18 through which the juice is delivered.

The plate 22 may contain or be formed with any convenient contrivance, such as upstanding blades, ribs, teeth or other protuberances, for macerating the produce to be juiced.

In operation, the juicer having been operated for one or more juicing cycles, depending upon capacity, the lid 30 is removed and the complete assembly comprising the additional filter 50 and the macerating plate 22 is removed by pulling upon the removal means comprising the carrier 26. The removed assembly can then be taken to a suitable location, e.g. close to a draining board or a waste bin, and the additional filter 50 removed from the macerating plate and shaken or tapped to cause adherent residues to fall into or onto the chosen receptacle.

By the above means, the bulk of the residual material is conveniently and cleanly disposed of. Any residues adherent to the filter 50 or the macerating plate 22 can be readily removed by rinsing, since there is no impediment to such an operation; the two components having been separated. If desired, the wall/rim member 56, or at least the flange 62, may be made removable from the remaining components of the filter 50.

The invention may be used alone or in combination with a rinsing arrangement, such as that described in GB-2376649-A, whereby residue materials adherent to the remaining working parts of the juicer, such as the foraminated wall 16 of the container 12 following removal of the filter 50 and its attachments, can be readily and conveniently cleaned by introducing water into the appliance. Moreover, by operation of the motor of the appliance, the fluid can be readily dispersed around, or distributed over, the container.

The aforesaid rinsing arrangement may conveniently be implemented by means of the invention disclosed in GB-2407483-A, which provides a convenient and user-friendly means whereby rinsing fluid can be introduced into the working compartment of a juicing arrangement. In particular, the fluid introduction means comprises a pusher device designed to be introduced into the container by way of an aperture through its lid; said aperture comprising part of a tubular passage extending into said container and providing a feed-tube for said produce, whereby the fluid can be introduced into the container by means of components that perform an existing function. By this means, water or another rinsing fluid can be conveniently introduced into the container.

As mentioned previously, the invention also finds application to kitchen machines other than juicers. In this respect, any electrically driven kitchen machine in which a macerator is used to slice, shred or otherwise fragment produce to be processed in a container, and where filter means are provided to assist in retaining, within the container, unwanted residues of the maceration process, can usefully incorporate the invention.

## Claims

1. A kitchen machine comprising a substantially tubular container (12) for produce to be macerated, said container (12) comprising a base (24) and a foraminated wall (16) extending away from said base; the machine further comprising a macerating device (22) in operative communication with the container (12), a motor capable of rotating the container (12) and/or the macerating device (22) about an axis to slice, shred or otherwise fragment the produce, and filter means (16, 50) to substantially retain within said container (12) unwanted residues of said produce; said foraminated wall (16) forming a part of said filter means (16, 50); the machine being **characterised in that** said filter means (16, 50) further comprises additional filter means (50) disposed adjacent said foraminated wall (16), and **in that** the machine further comprises a removal means (26) protruding from the said macerating device (22) and extending along said axis; said removal means (26) being adapted to be grasped by a user to permit removal of said macerating device (22) and said additional filter means (50), together with residue materials retained thereby, from the container (12); and wherein, after said removal, the maccrating device (22) is further separable from said additional filter means (50).

2. A kitchen machine according to claim 1, configured as a juicer; wherein said tubular container (12) is located within a fixed casing (20) provided with an outlet (18) for juice, and wherein said filter means (16,50) is sufficiently porous to permit juice to flow therethrough to said outlet (18) whilst substantially retaining said residue materials within said container (12).

3. A kitchen machine according to claim 1 or claim 2, wherein said additional fitter means (50) comprises at least one disposable filter element.

4. A kitchen machine according to claim 1 or claim 2, wherein said additional filter means (50) comprises at least one re-usable filter element (52, 54, 56, 58, 60, 62).

5. A kitchen machine according to any preceding claim, wherein the additional filter means (50) is constructed so as to engage releasably with said macerating device (22).

6. A kitchen machine according to any preceding claim wherein the removal means (26) comprises a pillar disposed substantially centrally of said macerating device (22) and extending upwardly therefrom.

7. A kitchen machine according to claim 6 wherein the pillar (26) is shaped for ease of grasping by the fingers of a user to facilitate removal from said container (12) of said macerating device (22) and said additional filter means (50) together with residue materials retained thereby.

8. A kitchen machine according to claim 6 or claim 7 wherein the pillar (26) is shaped to engage for relative rotation a seating formed in a lid (30) used to cover said container (12).

## Patentansprüche

1. Eine Küchenmaschine bestehend aus einem im Wesentlichen rohrförmigen Behälter (12) für zu mazerierende Erzeugnisse, wobei der besagte Behälter eine Basis (24) und eine foraminierte, von der besagten Basis ausgehende Wand (16) aufweist; die besagte Maschine umfasst des weiteren eine mit dem Behälter im Betrieb kommunizierende Mazeriervorrichtung (22), einen Motor, der in der Lage ist, den Behälter (12) und/oder die Mazeriervorrichtung (22) um eine Drehachse zu drehen, so dass das Erzeugnis in Scheiben geschnitten, zerrissen oder auf sonstige Art und Weise zerkleinert wird, sowie Filtermittel (16, 50), von denen unerwünschte Erzeugnisrückstände weitgehend in dem besagten Behälter (12) zurückgehalten werden, wobei die besagte foraminierte Wand (16) Teil des besagten Filtermittels (16, 50) bildet, die Maschine ist **dadurch gekennzeichnet, dass** das besagte Filtermittel (16, 50) des Weiteren zusätzliche, an die besagte foraminierte Wand (16) angrenzende Filtermittel (50) aufweist, und dass die Maschine außerdem ein aus der besagten Mazeriervorrichtung (22) hervorstehendes und an der besagten Achse entlang verlaufendes Entnahmemittel (26) umfasst, wobei das besagten Entnahmemittel (26) so ausgebildet sind, dass es vorn Benutzer erfasst werden können und die Entnahme der besagten Mazeriervorrichtung (22) und der besagten zusätzlichen Filtermittel (50) zusammen mit von auf diese Art und Weise zurüekgehaltenem Material aus dem Behälter (12) gestattet, wobei nach der beugten Entnahme die Mazeriervorrichtung (22) selber von den besagten zusätzliche Filtermitteln (50) getrennt werden kann.

2. Eine Küchenmaschine gemäß Anspruch 1, die als Entsafter konfiguriert ist, wobei sich der besagte rohrförmige Behälter (12) in einem festen Gehäuse (20) befindet, das einen Abfluss (18) für Saft aufweist, und wobei das besagte Filtermittel (16,50) ausreichend porös ist, um die Durchströmung mit Saft zu dem besagten Abfluss (18) hin zu gestatten, jedoch besagte Erzeugnisrückstände weitgehend in dem besagten Behälter (12) zurückgchalten werden.

3. Eine Küchenmaschine gemäß Anspruch 1 oder Anspruch 2, bei der die besagten zusätzlichen Filtermittel (50) wenigstens ein Filterelement zum Wegwerfen aufweisen.

4. Eine Küchenmaschine gemäß Anspruch 1 oder Anspruch 2. bei der die besagten zusätzlichen Filtermittel (50) wenigstens ein wiederverwendbares Filterelement (52. 54, 56. 58, 60, 62) aufweisen.

5. Eine Küchenmaschine gemäß einem beliebigen der hervorgehenden Ansprüche, bei der die zusätzlichen Filtermittel (50) so ausgeführt sind, dass sic lösbar in die besagte Mazeriervorrichtung (22) eingreifen.

6. Eine Küchenmaschine gemäß einem der vorhergehenden Ansprüche, bei der das Entnahmemittel (26) eine im Wesentlichen mittig zu der besagten Mazeriervorrichtung (22) angeordnete und von dieser nach oben verlaufenden Säule umfasst.

7. Eine Küchenmaschine gemäß Anspruch 6, bei der die Formgebung der Säule (26) ihr Erlassen mit den Fingern des Benutzers zur Entfernung aus dem Behälter (12) der besagten Mazeriervorrichtung (22) zusammen mit den auf diese Weise zurückgehaltenen Erzeugnisrückständen erleichiert.

8. Eine Küchenmaschine gemäß Anspruch 6 oder Anspruch 7, bei der die Säule (26) so geformt ist, dass sie zur Ausführung einer relativen Drehbewegung in eine in einem Deckel (30) des besagten Behälters (12) ausgebildete Aufnahme eingreift.

## Revendications

1. Robot de cuisine comportant un récipient dans une large mesure tubulaire (12) permettant à un produit d'être macéré, ledit récipient (12) comportant une base (24) et une paroi foraminulée (16) s'étendant à distance en provenance de ladite base; le robot comportant par ailleurs un dispositif de macération (22) en communication fonctionnelle avec le récipient (12), un moteur capable de faire tourner le récipient (12) et / ou le dispositif de macération (22) autour d'un axe pour trancher, déchiqueter ou autrement morceler le produit, et un moyen de filtration (16, 50) permettant dans une large mesure de retenir à l'intérieur dudit récipient (12) les résidus non souhaités dudit produit ; ladite paroi foraminulée (16) formant une partie dudit moyen de filtration (16, 50) ; le robot étant **caractérise en ce que** ledit moyen de filtration (16, 50) comporte par ailleurs un moyen de filtration supplémentaire (50) disposé de manière adjacente par rapport à ladite paroi foraminulée (16), et **en ce que** le robot comporte par ailleurs un moyen de retrait (26) dépassant dudit dispositif de macération (22) et s'étendant le long dudit axe ; ledit moyen de retrait (26) étant adapté pour être saisi par un utilisateur pour permettre le retrait dudit dispositif de macération (22) et dudit moyen de filtration supplémentaire (50), ainsi que des matières résiduelles retenues de ce fait, en provenance du récipient (12) ; et dans lequel, après ledit retrait, le dispositif de macération (22) est par ailleurs séparable dudit moyen de filtration supplémentaire (50).

2. Robot de cuisine selon la revendication 1, configuré en tant que centrifugeuse; dans lequel ledit récipient tubulaire (12) est situé à l'intérieur d'un boîtier fixe (20) muni d'une sortie (18) pour le jus, et dans lequel ledit moyen de filtration (16, 50) est suffisamment poreux pour permettre au jus de s'écouler au travers de celui-ci jusqu'à ladite sortie (18) tout en retenant dans une large mesure les matières résiduelles à l'intérieur dudit récipient (12).

3. Robot de cuisine selon la revendication 1 ou la revendication 2, dans lequel ledit moyen de filtration supplémentaire (50) comporte au moins un élément filtrant jetable.

4. Robot de cuisine selon la revendication 1 ou la revendication 2, dans lequel ledit moyen de filtration supplémentaire (50) comporte au moins un élément filtrant réutilisable (52, 54, 56, 58, 60, 62).

5. Robot de cuisine selon l'une quelconque des revendications précédentes, dans lequel le moyen de filtration supplémentaire (50) est construit de façon à s'accoupler de manière libérable audit dispositif de macération (22).

6. Robot de cuisine selon l'une quelconque des revendications précédentes, dans lequel le moyen de retrait (26) comporte une colonne disposée dans une large mesure de manière centrale par rapport audit dispositif de macération (22) et s'étendant vers le haut en provenance de celui-ci.

7. Robot de cuisine selon la revendication 6, dans lequel la colonne (26) est d'une forme facilitant la saisie à l'aide des doigts d'un utilisateur pour faciliter le retrait dudit récipient (12) dudit dispositif de macération (22) et dudit moyen de filtration supplémentaire (50) ainsi que des matières résiduelles retenues de ce fait.

8. Robot de cuisine selon la revendication 6 ou la revendication 7, dans lequel la colonne (26) est d'une forme permettant d'accoupler à des fins de rotation relative une embase formée dans un couvercle (30) servant à couvrir ledit récipient (12).
